# EUROPEAN PATENT APPLICATION

(11) **EP 1 916 700 A2**
(43) Date of publication of application: **30.04.2008**
(21) Application number: 07119419.5
(22) Date of filing: 26.10.2007
(51) Int. Cl.: H01J 63/06, H01J 61/52

(54) **Light emission device and display device using the light emission device**

(30) Priority: 27.10.2006 KR 20060105023; 27.10.2006 KR 20060105024
(71) Applicant: Samsung SDI Co., Ltd., Suwon-si Gyeonggi-do (KR)
(72) Inventor: Shin, Jong-Hoon, Legal & IP Team, Suwon-si, Gyeonggi-do (KR); Jun, Pil-Goo, Legal & IP Team, Suwon-si, Gyeonggi-do (KR)
(74) Representative: Hengelhaupt, Jürgen

(57) **Abstract**

A light emission device is provided including a first substrate and a second substrate facing the first substrate. The light emission device further includes a vacuum vessel between the first substrate and the second substrate. An electron emission unit is on the first substrate. A light emission unit is on the second substrate. A heat transfer medium is in the vacuum vessel. The heat transfer medium is adapted to absorb and to dissipate generated heat of the vacuum vessel. The second substrate includes an active area and a non-active area surrounding the active area. The heat transfer medium is in the non-active area.

## Description

### BACKGROUND OF THE INVENTION

### Field of the Invention

The present invention relates to a light emission device and a display device using the light emission device, and more particularly, to a light emission device having a heat dissipation structure.

### Description of Related Art

A liquid crystal display is one of a variety of flat panel display devices that displays an image by varying light transmission of each pixel using dielectric anisotropy that varies twisting angle of liquid crystals according to a voltage applied. The liquid crystal display is lightweight, occupies less space, and has less power consumption as compared with a conventional cathode ray tube.

The liquid crystal display includes a liquid crystal (LC) panel assembly and a backlight unit for emitting light toward the LC panel assembly. The LC panel assembly receives light emitted from the backlight unit and allows the light to be transmitted or blocked by a liquid crystal layer.

The backlight unit is classified according to its light source into different types, one of which is a cold cathode fluorescent lamp (CCFL). The CCFL is a linear light source that can uniformly emit light to the LC panel assembly through a plurality of optical members such as a diffusion sheet, a diffuser plate, and/or a prism sheet.

However, since the CCFL emits the light through the optical members, there may be light loss. Furthermore, since the CCFL has relatively higher power consumption, the overall power consumption of the liquid crystal display employing the CCFL increases. In addition, since the CCFL is difficult to be sized large due to its structure limitations, it is hard to utilize the CCFL in a large sized liquid crystal display of over 76.2 cm (30 inches).

A backlight unit employing light emission diodes (LEDs) is also known. LEDs are point light sources that are combined with a plurality of optical members such as a reflection sheet, a waveguide plate, a diffusion sheet, a diffuser plate, a prism sheet, and/or the like, thereby forming the backlight unit. The LED type of backlight unit has a fast response time and good color reproduction. However, LEDs are costly and increase the overall thickness of the liquid crystal display.

Thus, conventional backlight units have deficiencies due to its CCFL or LED light source. Furthermore, conventional backlight units maintain a uniform brightness over all the light emission area when the associated display is driven. Therefore, it is difficult to improve the display quality to a sufficient level.

For example, when the liquid crystal panel assembly displays an image having a bright portion and a dark portion in accordance with an image signal and different intensities of light are provided to the respective bright and dark portions, the liquid crystal display can not realize an image having an improved contrast property.

Therefore, it is desirable to provide a backlight unit that can overcome the shortcomings of the conventional backlight units to improve the contrast property of the image displayed by the liquid crystal display.

Also, in recent years, a field emission type of backlight unit that emits light using electron emission by an electric field has been developed to replace the CCFL and LED types of backlight units. The field emission type of backlight unit is a surface light source, which has relatively low power consumption and can be designed in a large size. Furthermore, the field emission type of backlight unit does not require a plurality of optical members.

A conventional field emission type of backlight unit includes a vacuum envelope having first and second substrates and a sealing member, an electron emission unit having electron emission regions and driving electrodes provided on the first substrate, and a light emission unit having a phosphor layer and an anode electrode provided on the second substrate.

Electric fields are formed around electron emission regions at the unit pixels where a voltage difference between the driving electrodes exists. The emitted electrons are accelerated to a corresponding portion of the phosphor layer by high voltage applied to the anode electrode to thereby collide with the portion of the phosphor layer and excite the phosphor layer.

However, since the field emission type of backlight unit should maintain high brightness when used as a display device, the anode electrode must receive a high voltage. In this regard, high temperature heat is generated in the field emission type of backlight.

If the heat can not easily dissipate from the field emission type of backlight unit and remains therein, the heat can reduce the life of the electron emission region and generate a performance deterioration resulting in low brightness of the field emission type of backlight unit. To prevent or reduce these problems, a fan can be provided to the field emission type of backlight to dissipate the heat, but use of a fan increases the thickness of the field emission type of backlight unit.

### SUMMARY OF THE INVENTION

As aspect of an embodiment of the present invention is directed toward a light emission device provided with a dissipation structure that can effectively dissipate heat generated in a light emission device without an increase of thickness. Another aspect of an embodiment of the present invention is directed toward a light emission device that can enhance the contrast property of the screen by using the light emission device as a backlight unit.

According to an exemplary embodiment of the present invention, a light emission device comprises: a first substrate and a second substrate facing the first substrate; a vacuum vessel between the first substrate and the second substrate; an electron emission unit which is located on the first substrate; a light emission unit which is located on the second substrate; a heat transfer medium which is located in the vacuum vessel, the heat transfer medium being adapted to absorb and to dissipate generated heat of the vacuum vessel; an active area and a non-active area surrounding the active area, wherein the heat transfer medium is located in the non-active area.

The second substrate may be divided into an active area from which visible light is actually emitted (i.e. the outer border of the active area corresponds with the outer circumference of the phosphor layer(s)) and a non-active area surrounding the active area (i.e. the non-active area extends from the outer border of the active area to the inner circumference of the sealing member(s)).

The vacuum vessel is preferably adapted to maintain a vacuum of 1 *10⁻³ Pascal or less, more preferably of 1*10⁻⁴ Pascal or less.

The light emission device may preferably have (lateral) dimensions of 76.2 cm (30 inches) or more. According to the invention the use of a fan can be avoided, thereby reducing the thickness of the light emission device, i.e. preferably no fan is provided inside the light emission device and no fan is connected with the light emission device.

In an exemplary embodiment of the present invention, the heat transfer medium may include a chamber in the non-active area and a coolant in the chamber.

In an exemplary embodiment of the present invention, the chamber may include a housing on the first substrate for enclosing the chamber with the first substrate.

In an exemplary embodiment of the present invention, the coolant may contact the light emission unit.

Preferably, the coolant transmits heat to a radiation plate and/or a heat sink and functions such that the heat is dissipated out of the vacuum vessel. Therefore, the coolant is preferably connected to a radiation plate and/or a heat sink.

In an exemplary embodiment of the present invention, the light emission unit may include a phosphor layer and an anode electrode on a surface of the phosphor layer. The anode electrode contacts the coolant.

In an exemplary embodiment of the present invention, the light emission unit may include phosphor layers divided into a plurality of sections, a black layer between the sections, and an anode electrode on surfaces of the phosphor layers or the black layer. At least one of the anode electrode and the black layer contacts the coolant.

In an exemplary embodiment of the present invention, the vacuum vessel may include a sealing member disposed along edge portions between the first substrate and the second substrate. The sealing member, the first substrate and the second substrate are adapted such that the interior of the sealed vessel is kept at a vacuum of 1*10⁻³ Pascal or less, preferably 1 *10⁻⁴ Pascal or less. The chamber is defined by the sealing member and by a barrier disposed in the vacuum vessel.

In an exemplary embodiment of the present invention, the barrier may have a closed curve shape and is formed along the sealing member.

In an exemplary embodiment of the present invention, the barrier may be connected to the first substrate and the second substrate.

In an exemplary embodiment of the present invention, the coolant may include an ethylene-based material.

In an exemplary embodiment of the present invention, the electron emission unit may include cathode electrodes, gate electrodes crossing the cathode electrodes, an insulating layer between the cathode electrodes and the gate electrodes, and electron emission regions coupled to the cathode electrodes.

In an exemplary embodiment of the present invention, the electron emission region may include at least one of a carbon-based material or a nanometer-sized material.

According to another exemplary embodiment of the present invention, a display device is provided to include the above-described light emission device and a panel assembly configured with the light emission device to display an image in response to light emitted from the light emission device.

Preferably no optical member is arranged between the above-described light emission device and the panel assembly.

In an exemplary embodiment of the present invention, the panel assembly may include a plurality of first pixels disposed in a panel assembly matrix having first pixel rows and first pixel columns, and the light emission device may include a plurality of second pixels disposed in a light emission device matrix having second pixel rows and second pixel columns. The second pixels are less in number than the first pixels. The second pixels are adapted to emit different intensities of light.

In an exemplary embodiment of the present invention, each of the second pixels may be driven to represent gray levels in a gray scale ranging from 2 to 8 bits.

### BRIEF DESCRIPTION OF THE DRAWINGS

FIG. 1 is a cross-sectional view of a light emission device according to an exemplary embodiment of the present invention.
FIG. 2 is a partial exploded perspective view of the light emission device of FIG. 1.
FIG. 3 is a cross-sectional view of a light emission device according to another exemplary embodiment of the present invention.
FIG. 4 is a schematic exploded perspective view of the light emission device of FIG. 3.
FIG. 5 is a cross-sectional view of a light emission device according to still another exemplary embodiment of the present invention.
FIG. 6A and FIG. 6B are top schematic views of the light emission device according to the still another exemplary embodiment of the present invention.
FIG. 7 is a cross-sectional view of a light emission device according to still yet another exemplary embodiment of the present invention.
FIG. 8 is an exploded perspective view of a display device according to an exemplary embodiment of the present invention.
FIG. 9 is a partially cut-way perspective view of a display panel of FIG. 8.
FIG. 10 is a block schematic diagram of a driving part for driving the display device of FIG. 8.

### DETAILED DESCRIPTION

In the following detailed description, only certain exemplary embodiments of the present invention have been shown and described, simply by way of illustration. The invention may, however, be embodied in many different forms and should not be construed as being limited to the exemplary embodiments set forth herein; rather these exemplary embodiments are provided so that this disclosure will be thorough and complete, and will convey the concept of the invention to those skilled in the art. Elements that are not pertinent to the detailed description of exemplary embodiments may be omitted, and like reference numbers will be used throughout the drawings to refer to like elements.

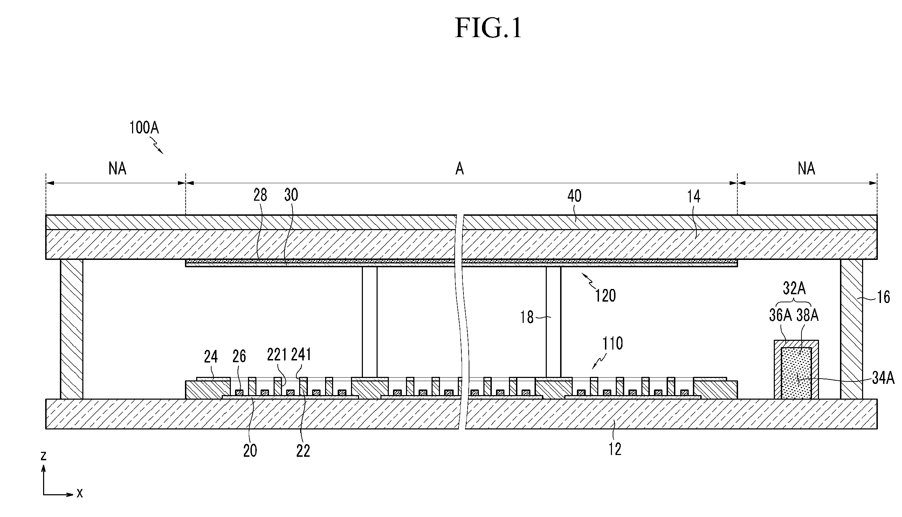

FIG. 1 is a sectional view of a light emission device 100A according to an exemplary embodiment of the present invention. The light emission device 100A of the present exemplary embodiment includes first and second substrates 12 and 14 facing each other with an interval (e.g., a predetermined interval) therebetween. A sealing member 16 is provided at the peripheries of the first and second substrates 12 and 14 to seal them together and thus form a sealed vessel. The interior of the sealed vessel is kept at a degree of vacuum of about 1.3*10⁻⁴ Pascal (10⁻⁶ Torr) or less.

The sealing member 16 may be formed of a frit glass in a bar shape, or it may be a glass frame provided between the first and second substrates with a frit glass to bond the glass frame to the substrates.

In the vacuum vessel, an electron emission unit 110 is disposed at an inner surface of the first substrate 12 (or at a surface of the first substrate 12 facing the second substrate 14), a light emission unit 120 is disposed at an inner surface of the second substrate 14 (or at a surface of the second substrate 14 facing the first substrate 12), and spacers 18 for maintaining a distance between the first substrate 12 and the second substrate 14 are disposed therebetween.

The electron emission unit 110 includes electron emission elements that are classified into those using hot cathodes as an electron emission source and those using cold cathodes as the electron emission source.

There are several types of cold cathode electron emission elements, including field emitter array (FEA) elements, surface-conduction-emission (SCE) elements, metal-insulator-metal (MIM) elements, and metal-insulator-semiconductor (MIS) elements. In the exemplary embodiment, the light emission device 100A may include an electron emission unit with an FEA type of electron emission element.

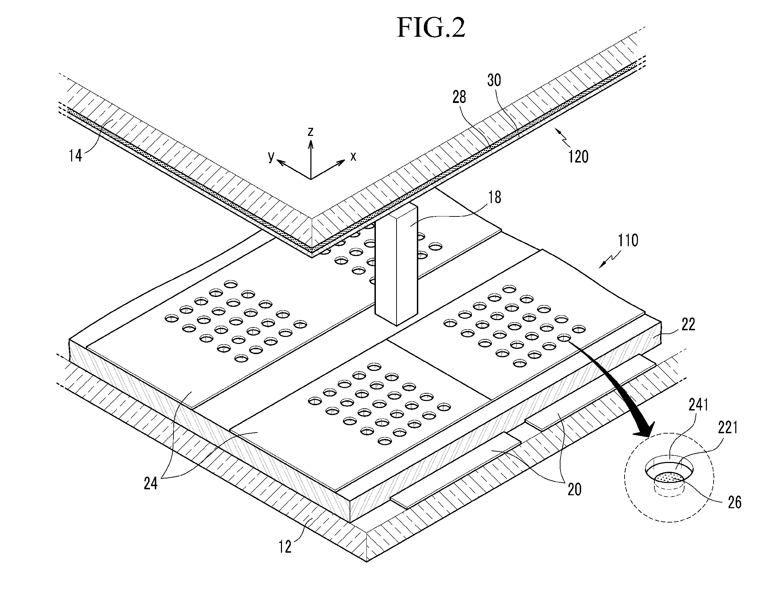

FIG. 2 is a partial exploded perspective view of an active area of the light emission device 100A of FIG. 1. Referring to FIGs. 1 and 2, the electron emission unit 110 includes first electrodes 20 and second electrodes 24 insulated from each other by an insulating layer 22, and electron emission regions 26 electrically connected to one of the first electrodes 20 and the second electrodes 24.

When the electron emission regions 26 are formed on the first electrodes 20, the first electrodes 20 are cathode electrodes that apply a current to the electron emission regions 26 and the second electrodes 24 are gate electrodes that induce electron emission by forming an electric field around the electron emission regions 26 according to a voltage difference between the cathode electrodes and the gate electrodes. On the contrary, when the electron emission regions 26 are formed on the second electrodes 24, the second electrodes 24 are the cathode electrodes and the first electrodes 20 are the gate electrodes.

Among the first and second electrodes 20 and 24, the electrodes arranged along rows of the light emission device 100A function as scan electrodes, and the electrodes arranged along columns function as data electrodes. FIGs. 1 and 2 show an example in which the electron emission regions 26 are formed on the first electrodes 20, the first electrodes 20 are arranged along the columns (in the y-axis direction in the drawings) of the light emission device 100A, and the second electrodes 24 are arranged along the rows (in an x-axis direction in the drawings) of the light emission device 100A. However, the arrangements of the electron emission regions 26 and the first and second electrodes 20 and 24 are not limited to the above case.

Openings 221 and 241 are formed through the insulating layer 22 and the second electrodes 24 at crossing regions of the first and second electrodes 20 and 24 to partly expose the surface of the first electrodes 20. The electron emission regions 26 are formed on the first electrodes 20 through the openings 221 of the insulating layer 22.

The electron emission regions 26 are formed of a material that emits electrons when an electric field is applied thereto under a vacuum atmosphere, such as a carbon-based material or a nanometer-sized material. The electron emission regions 26 can be formed of carbon nanotubes, graphite, graphite nanofibers, diamonds, diamond-like carbon, C₆₀ (fullerene), silicon nanowires, or combinations thereof. The electron emission regions 26 can be formed through screen-printing, direct growth, chemical vapor deposition, and/or sputtering processes.

Alternatively, the electron emission regions can be formed in a tip structure formed of a Mo-based and/or Si-based material.

The light emission unit 120 formed on the second substrate 14 includes a phosphor layer 28 and an anode electrode 30 disposed on the phosphor layer 28. The phosphor layer 28 may be a white phosphor layer or a combination of red, green, and blue phosphors layers. In the exemplary embodiment, the former is illustrated.

The white phosphor layer may be formed on the entire effective region of the second substrate 14, or may be patterned to have a plurality of sections corresponding to the respective pixel regions. A combination of the red, green, and blue phosphors may correspond to one pixel region.

The anode electrode 30 may be formed of a metal such as aluminum (AI) while covering the phosphor layer 28. The anode electrode 30 is an acceleration electrode that receives an external high voltage (e.g., a voltage of about several thousand volts) to maintain the phosphor layer 28 at a high electric potential state. The anode electrode 30 functions to enhance the luminance by reflecting the visible light back toward the second substrate 14 upon being emitted from the phosphor layer 28 toward the first substrate 12.

A heat transfer medium 32A for dissipating heat generated from the electron emission unit 110 and the light emission unit 120 is formed inside the vacuum vessel. The second substrate 14 may be divided into an active area A from which visible light is actually emitted (i.e. the outer border of the active area A corresponds with the outer circumference of the phosphor layers) and a non-active area NA surrounding the active area A (i.e. the non-active area NA extends from the outer border of the active area A to the inner circumference of the sealing member or sealing members). The heat transfer medium 32A is disposed in the non-active area NA. The heat transfer medium 32A includes a housing 36A forming a chamber 34A, and a coolant 38A is accommodated in the chamber 34A. The housing 36A is formed on one of the first substrate 12 or the second substrate 14 at an inward area from the sealing member 16 (or at an area within the light emission device 100A), while forming the chamber 34A with the selected substrate. The shape of the housing 36A may suitably vary as long as it can receive the coolant therein. The housing may be formed of a glass material such as that of the sealing member 16, or of a metal material (single metal or alloy) having high thermal conductivity. The coolant 38A transmits heat to a radiation plate (or a heat sink), and functions such that the heat is dissipated out of the vacuum vessel. When the coolant 38A functions as above, it is possible for the state of the coolant 38A to be solid or liquid, or a combination thereof. In the exemplary embodiment, the coolant 38A may include carbon dioxide or an ethylene-based material such as ethylene or ethylene glycol.

The heat transfer medium 32A may be partially formed in the non-active area NA. Alternatively, the heat transfer medium 32A may be formed to surround the active area A (or to surround the entire perimeter of the active area A).

A diffuser plate 40 may be located on the outer surface of the second substrate 14 to diffuse the light radiated from the light emission unit 120.

In the light emission device 100A, if voltages (e.g., predetermined voltages) are applied to the cathode electrodes 20 and the gate electrodes 24, respectively, an electric field is formed around the electron emission regions 26 at pixel regions where the voltage difference between the cathode and gate electrodes 20 and 24 is higher than a threshold value, thereby emitting electrons from the electron emission regions 26. The emitted electrons are accelerated by the high voltage applied to the anode electrode 30 to collide with the corresponding phosphor layer 28, thereby exciting the phosphor layer 28. The light emission intensity of the phosphor layer 28 at each pixel corresponds to the electron emission amount of the corresponding pixel.

The heat generated from the electron emission unit 110 and the light emission unit 120 during the above-described driving procedure can be dissipated out of the light emission device 100A via the heat transfer medium 32A. Here, the radiation plate may facilitate the dissipation of the heat.

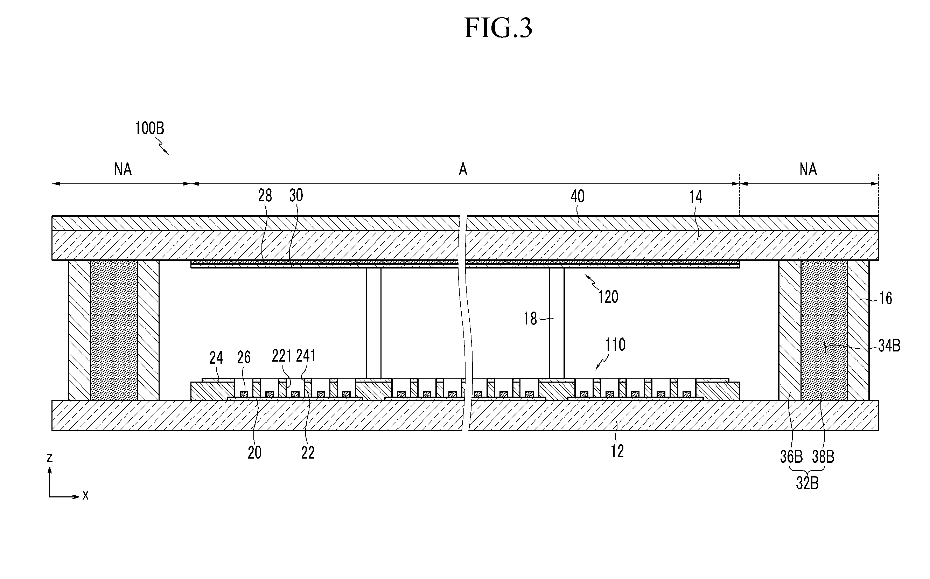

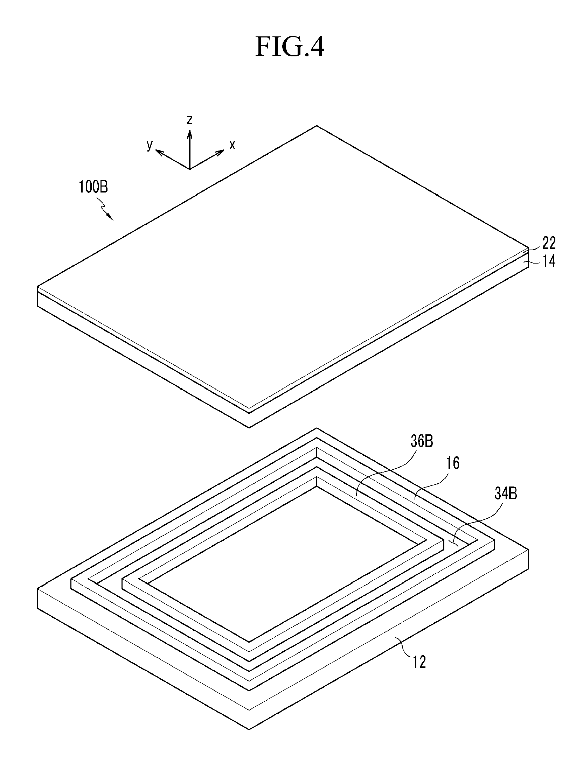

FIG. 3 is a cross-sectional view of a light emission device 100B according to another exemplary embodiment of the present invention, and FIG. 4 is a schematic exploded perspective view of the light emission device 100B of FIG. 3. For convenience, in this exemplary embodiment, the same (or substantially the same) elements as in the former exemplary embodiment will be denoted by like reference numerals and a repeated description thereof will not be provided.

Referring to FIG. 3, a heat transfer medium 32B includes a coolant 38B accommodated in a chamber 34B that is formed in a vacuum vessel. The chamber 34B may be formed by a barrier 36B that is disposed at an area inward of the sealing member 16 (or within the light emission device 100B) so that an interval (e.g., a predetermined interval) is formed between the barrier 36B and the sealing member 16. The barrier 36B is vertically disposed with respect to the inner surfaces of the first substrate 12 and the second substrate 14, and forms the chamber 34B with the sealing member 16. In addition, in the present exemplary embodiment, since the barrier 36B is connected with the first substrate 12 and the second substrate 14, the barrier 36B can function as a conventional spacer that endures a compression force applied to the vacuum vessel and maintains a uniform gap between the first substrate 12 and the second substrate 14.

As shown in FIG. 4, the barrier 36B may be formed on the second substrate 14 along a line of the sealing member 16 having a closed curve shape.

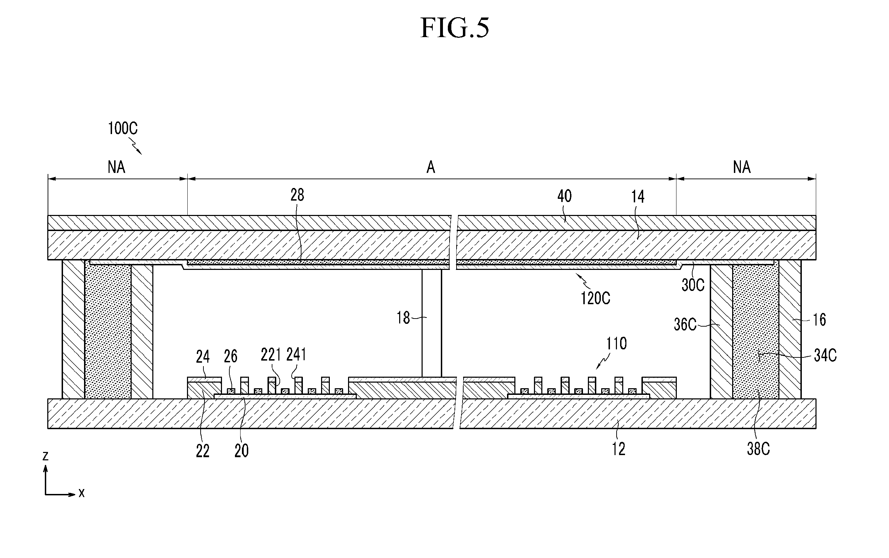

FIG. 5 is a cross-sectional view of a light emission device according to still another exemplary embodiment of the present invention. For convenience, in FIG. 5, like elements will be denoted by like reference numerals and a repeated description thereof will not be provided.

In the exemplary embodiment, a light emission device 100C constitutes the same (or substantially the same) elements as the light emission device 100B of FIG. 3, with the exception that a light emission unit 120C is directly connected to a coolant 38C to improve heat dissipation efficiency. That is, an anode electrode 30C of the light emission unit 120C extends to the non-active area NA by a length (e.g., a predetermined length) across a barrier 36C, and contacts the coolant 38C.

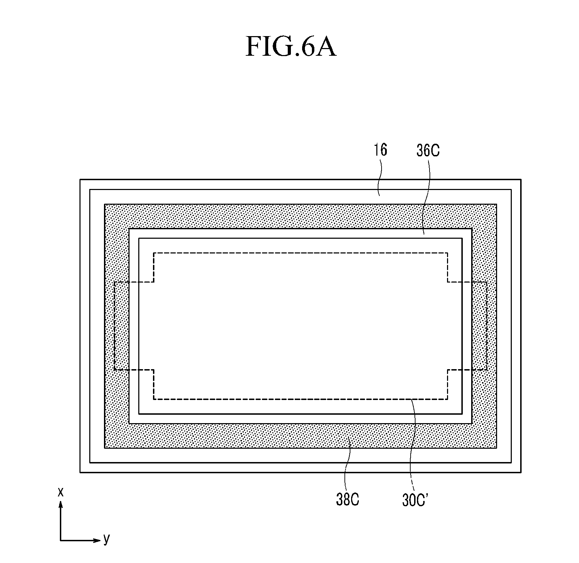

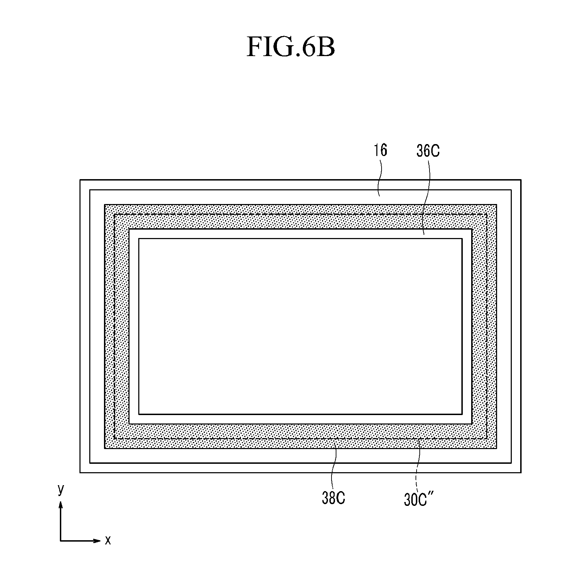

The anode electrode 30C can contact the coolant 38C with various suitable patterns. FIGs. 6A and 6B show patterns of the anode electrode, respectively. Referring to FIG. 6A, an anode electrode 30C' may include portions that partially protrude from both sides to contact the coolant 38C. Alternatively, referring to FIG. 6B, an anode electrode 30C" may include edges (or edge portions) that extend so that the edges (or edge portions) contact the coolant 38C. In FIGs. 6A and 6B, the anode electrodes 30C', 30C" are shown as a dotted line.

As shown in FIGs. 6A and 6B, the barrier 36C may be formed along a line of the sealing member 16 having a closed curve shape, and the coolant 38C may surround the active area A (or surround the entire perimeter of the active area A). Alternatively, the barrier 36C may be formed along one side wall of a line of the sealing member 16, and coolant 38C can be partially positioned on the non-active region NA. That is, in the case that the barrier has a chamber 34C into which the coolant can be put, the barrier can form various suitable shapes thereof.

The heat that is exhausted from the phosphor layer 28 and the anode electrode 30 transmits to the coolant 38C, and the heat absorbed by the coolant 38C can be dissipated through the radiation plate, which is positioned on the back side of the first substrate 12. In this process, since the anode electrode 30 directly contacts the coolant 38C, the efficiency of the heat transmission may increase.

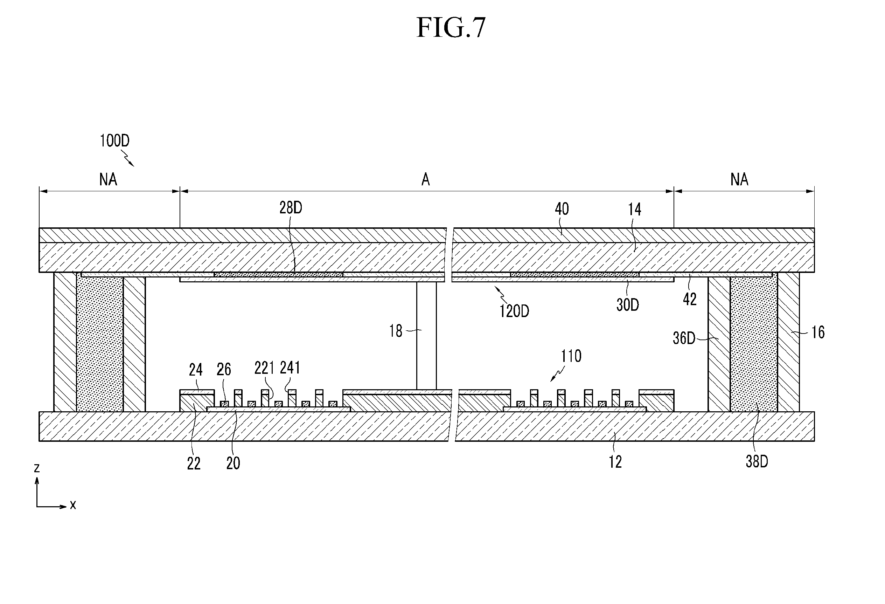

FIG. 7 is a cross-sectional view of a light emission device according to still yet another exemplary embodiment of the present invention. For convenience, in this exemplary embodiment, like elements will be denoted by like reference numerals and a repeated description thereof will not be provided.

Referring to FIG. 7, a light emission device 100D includes a light emission unit 120D having phosphor layers 28D, a black layer 42 formed between the phosphor layers 28D, and an anode electrode 30D formed on one side of the phosphor layers 28D and the black layer 42.

In this exemplary embodiment, the black layer 42 crosses the barrier 36D and extends to the non-active area NA, and thereby contacts the coolant 38D. The extending pattern of the black layer 42 can be formed the same (or substantially the same) as the extending pattern of the anode electrode of the previous exemplary embodiment of FIGs. 6A and 6B.

Additionally, in this exemplary embodiment, it is explained that the black layer 42 is extended and contacts the coolant 38D. However, the anode electrode, as well the black layer, may be extended to contact the coolant 38D.

The light emission displays 100A, 100B, 100C, and 100D of the respective foregoing exemplary embodiments may be applied as a back light unit of the liquid display device that will be explained in more detail below.

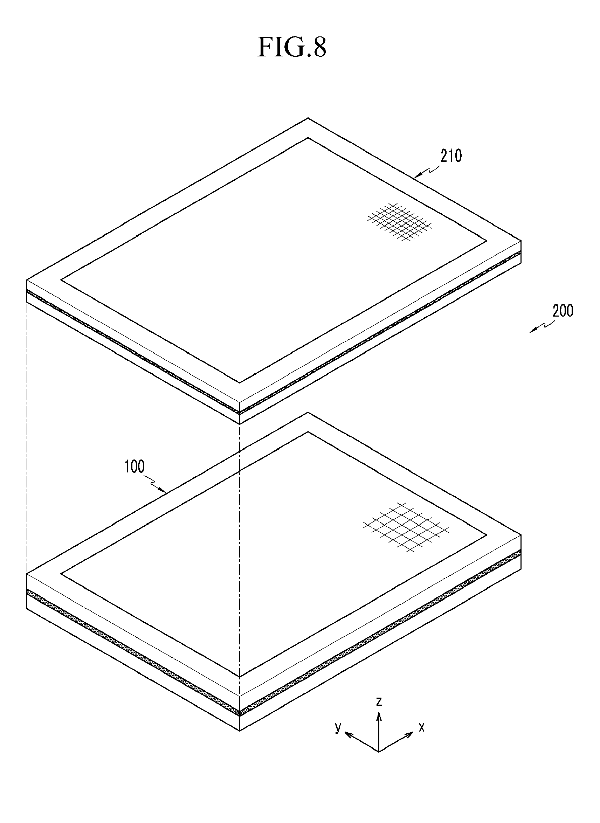

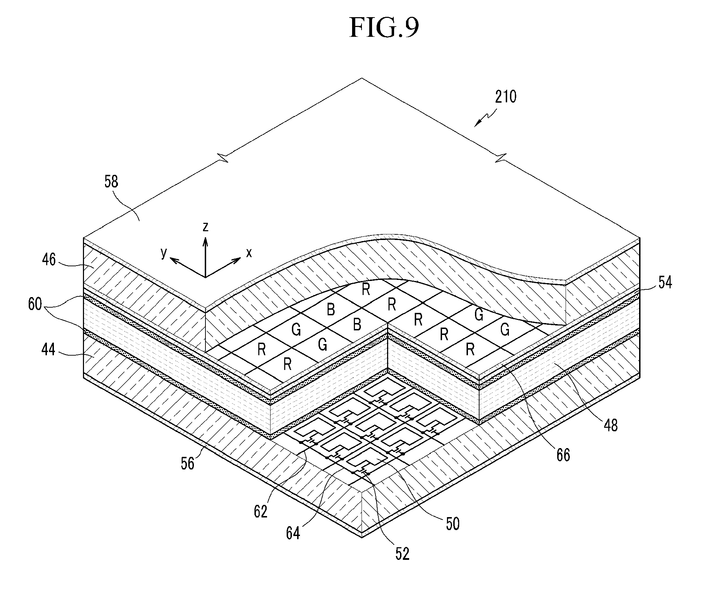

FIG. 8 shows a display having a light emission device 100 according to an exemplary embodiment of the present invention, and FIG. 9 is a partial sectional view of a display panel 210 (the display panel may also be referred to as panel assembly) of FIG. 8.

Referring to FIG. 8, a display device 200 includes the light emission device 100 and the display panel 210 disposed on the light emission device 100.

The display panel 210 may be a liquid crystal display panel or another type of passive (non-emissive) display panel. In the following description, the display panel 210 is assumed, by way of example, to be a liquid crystal display panel.

The display panel 210 includes a plurality of pixels arranged in rows and columns, and the light emission device 100 is disposed in the rear of the display panel 210 to emit the light toward the display panel 210.

The light emission device 100 has a smaller number of pixels than the display panel 210. The pixels of the light emission device 100 are also arranged in rows and columns. For example, one of the pixels of the light emission device 100 may correspond to two or more of the pixels of the display panel 210.

As depicted in FIG. 8, the row direction may be the x-direction of the display device 200 and the column direction may be the y-direction of the display device 200. The cathode electrodes (e.g., 20 in FIG. 3) of the light emission device 100 are formed extending in the column direction and the gate electrodes (e.g., 24 in FIG. 3) are formed extending in the row direction.

When the number of pixels arranged along a row of the display panel 210 is M and the number of pixels arranged along a column of the display panel 210 is N, the resolution of the display panel 52 can be represented as MxN. When the number of pixels arranged along a row of the light emission device 100 is M' and the number of pixels arranged along a column of the light emission device 100 is N', the resolution of the light emission device 100 can be represented as M'xN'.

In this exemplary embodiment, the number of pixels M can be defined as a positive number higher than 240 and the number of pixels N can also be defined as a positive number higher than 240. The number of pixels M' can be defined as one of the positive numbers between 2 and 99 and the number of pixels N' can also be defined as one of the positive numbers between 2 and 99.

The light emission device 100 is an emissive display panel having an M'xN' resolution, and each pixel of the light emission device 100 emits an intensity (e.g., a predetermined intensity) of light to one or more corresponding pixels of the display panel 210.

Referring to FIG. 9, the display panel 210 (which may also be referred to as panel assembly) includes a transparent third substrate 44, a transparent fourth substrate 46, and a liquid crystal layer 48 disposed between the third and fourth substrates 44 and 46. Pixel electrodes 50 and switching elements 52 are formed on an inner surface of the third substrate 44 (or on the surface of the third substrate 44 facing the fourth substrate 46). A common electrode 54 is formed on an inner surface of the fourth substrate 46 (or on the surface of the fourth substrate 46 facing the third substrate 44).

A pair of polarizing plates 56 and 58 are respectively located on outer surfaces of the third and fourth substrates 44 and 46. The polarizing plates 56 and 58 are disposed such that polarizing axes thereof cross each other (e.g., cross each other at right angles). Orientation layers 60 are disposed to face each other with the liquid crystal layer 48 interposed therebetween.

A plurality of gate lines 62 for transferring gate signals (scan signals) and a plurality of data lines 64 for transferring data signals are formed on the inner surface of the third substrate 44. The gate lines 62 extend in the x-direction in parallel with each other, and the data lines 64 extend in the y-direction in parallel with each other.

The pixel electrodes 50 are respectively located at sub-pixels and connected to the gate and data lines 62 and 64 through switching elements 52.

Disposed between the fourth substrate 46 and a common electrode 54 is a color filter 66. The color filter 66 includes red, green, and blue filters corresponding to the respective sub-pixels. Three of the sub-pixels at which the red, green, and blue filters are respectively located form one unit pixel.

With the above-described display panel 210, when a switching element 52 is turned on, an electric field is formed between the pixel electrode 52 and the common electrode 54 and a twisting angle of liquid crystal molecules located in the liquid crystal layer 48 varies by the electric field. The display panel 210 controls the twisting angle of each of the liquid crystal molecules at each sub-pixel to control an amount of passing light, thereby realizing a color image.

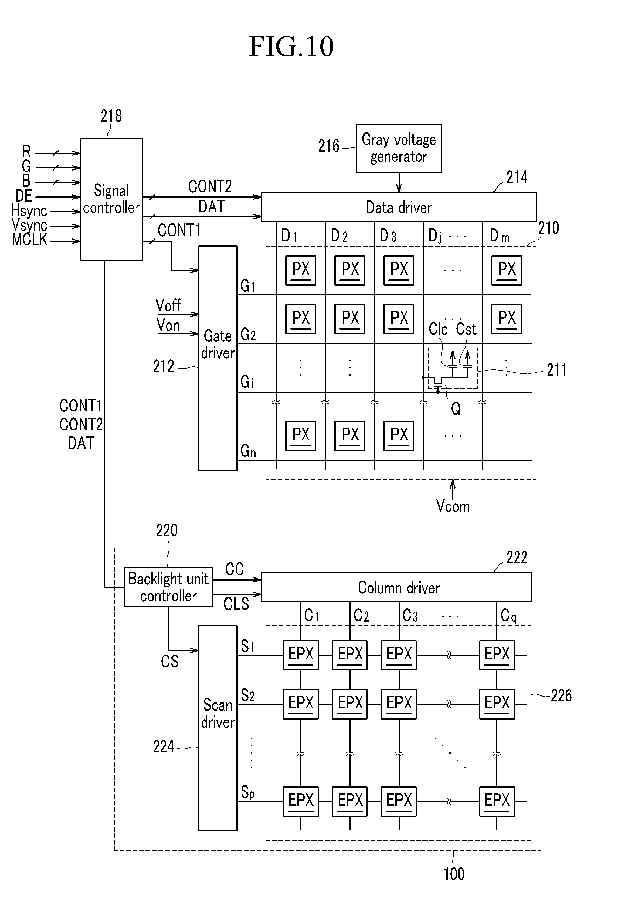

FIG. 10 is a block diagram of a driving part for driving the display device 200.

Referring to FIG. 10, a driving part of the display includes gate and data drivers 212 and 214 connected to the display panel 210, a gray voltage generator 216 connected to the data driver 214, and a signal controller 218 for controlling the gate and data drivers 212 and 214 as well as the display panel 210 and the light emission device 100.

When considering the display panel 210 as an equivalent circuit, the display panel 210 includes a plurality of signal lines and a plurality of pixels PX arranged in rows and columns and connected to the signal lines. The signal lines include gate lines G₁-Gₙ for transferring gate signals (scan signals) and data lines D₁-Dₘ for transferring data signals.

Each pixel PX, e.g., a pixel 211 connected to the i^{th} (i=1,2,...n) gate line Gᵢ and the j^{th} (j=1,2,...m) data line Dⱼ, includes a switching element Q connected to the gate (or signal) line Gᵢ and the data (or signal) line Dⱼ, and liquid crystal and sustain capacitors Clc and Cst connected to the switching element Q. If needed or desired, in another exemplary embodiment, the sustain capacitor Cst may be omitted.

The switching element Q is a 3-terminal element such as a thin film transistor (TFT) formed on a lower substrate of the display panel 210. That is, the switching element Q includes a control terminal connected to the gate line Gᵢ, an input terminal connected to the data line Dⱼ, and an output terminal connected to the liquid crystal and sustain capacitors Clc and Cst.

The gray voltage generator 216 generates two sets of gray voltages (or two sets of reference gray voltages) related to the transmittance of the pixels PX. One of the two sets has a positive value with respect to a common voltage Vcom, and the other has a negative value.

The gate driver 212 is connected to the gate lines G₁-Gₙ of the display panel 210 to apply a gate signal, which is a combination of a switch-on voltage Von and a switch-off voltage Voff, to the gate lines G₁-Gₙ.

The data driver 214 is connected to the data lines D₁-Dₘ of the display panel 210. The data driver 214 selects a gray voltage from the gray voltage generator 216 and applies the selected gray voltage to the first data lines D₁-Dₘ. However, when the gray voltage generator 216 does not provide all of the voltages for all of the gray levels but provides only a certain (or predetermined) number of reference gray voltages, the data driver 214 divides the reference gray voltages, generates the gray voltages for all of the gray levels, and selects a data signal from the gray voltages.

The signal controller 218 controls the gate driver 212, the data driver 214, and a light emission device controller 220. The signal controller 218 receives input video signals R, G, and B and an input control signal for controlling the display of the image from an external graphics controller.

The input video signals R, G, and B have luminance information for each pixel PX. The luminance information contains information about a certain (or predetermined) number of gray levels (e.g., 1024 (=2¹⁰), 256 (=2⁸), or 64 (=2⁶)). The input control signal may be a vertical synchronizing signal Vsync, a horizontal synchronizing signal Hsync, a main clock signal MCLK, and/or a data enable signal DE.

The signal controller 218 appropriately processes the input video signals R, G, and B in response to the operating conditions of the display panel 210 with reference to the input control signal, generates a gate control signal CONT1 and a data control signal CONT2, transmits the gate control signal CONT1 to the gate driver 212, and transmits the data control signal CONT2 and the processed images signal DAT to the data driver 214. Further, the signal controller 218 transmits the gate control signal CONT1, the data control signal CONT2, and the processed video signal DAT to the light emission device controller 220.

The light emission device 100 includes the light emission device controller 220, a column driver 222, a scan driver 224, and a display unit 226.

The display unit 226 includes a plurality of scan lines S₁-Sₚ for transferring scan signals, a plurality of column lines C₁-C_{q} for transferring column signals, and a plurality of light emission pixels EPX. The light emission pixels EPX are located at respective regions defined by the crossing points of the scan lines S₁-Sₚ and the column lines C₁-C_{q}. The scan lines S₁-Sₚ are connected to the scan driver 224 and the column lines C₁-C_{q} are connected to the column driver 222. The scan driver 224 and the column driver 222 are connected to the light emission device controller 220 to operate in response to a control signal of the light emission device controller 220.

The scan lines S₁-Sₚ are the scan electrodes of the above-described light emission device, and the column lines C₁-C_{q} are the data electrodes of the above-described light emission device.

The light emission device controller 220 generates a scan driver control signal CS for controlling the scan driver 224 using the gate control signal CONT1, and transfers the scan driver control signal CS. Further, the light emission device controller 220 generates a column driver control signal CC using the data control signal, and further generates a column signal CLS corresponding to the video signal DAT. The generated column driver control signal (CC) and column signal (CLS) are transferred to the column driver 222. The light emission device controller 220 generates luminance information for each pixel of the light emission device 100 from a frame of video signal DAT, and further generates the column signal CLS in accordance with the generated luminance information.

The scan driver 224 sequentially applies the driving voltages, each having a certain (or predetermined) pulse, to the scan lines S₁-Sₚ in response to the scan driver control signals input thereto. The column driver 222 applies driving voltages corresponding to color signals to the column lines C₁-C_{q} in response to the column driver control signals input thereto.

With the above-described structure, the display unit 226 of the light emission device 100 receives a driving signal synchronized with the video signal, emits light having proper intensity in response to the luminance information of each pixel, and provides the emitted light to the display panel 210. Each of the light emission pixels EPX of the light emission device 226 may be driven to represent gray levels in a gray scale ranging from 2 to 8 bits.

According to the above-described exemplary embodiment, when the display panel 210 displays an image having different brightness at different locations, the light emission device 100 can provide relatively high intensity of light to pixels of the display panel, which display a relatively bright image, and relatively low intensity of light to pixels of the display panel, which display a relatively dark image. In addition, the light emission pixels of the light emission device 100, which correspond to the pixels of the display panel and display a black image, may be turned off.

As a result, the display device 200 is able to improve the contrast property through the above-described control process.

Since the light emission devices of the foregoing exemplary embodiments are surface (or area) light sources, optical members that are used for the CCFL type of backlight unit and the LED type of backlight unit are not required. Also, the light emission devices of the foregoing exemplary embodiments reduce the light loss that may occur as the light passes through the optical members. Therefore, there is no need to emit high intensity light and thus the power consumption can be reduced.

Further, since optical members are not needed, the manufacturing cost can be reduced to be lower than the LED type of backlight unit. In addition, since the light emission device can be easily formed to have a relatively large size, it can be applied to a display of greater than 30 inches.

Furthermore, although the light emission device according to the foregoing exemplary embodiments are used as a device having high luminance, since the heat transfer medium plate is provided in the vacuum vessel, heat generated in the vacuum vessel can be effectively dissipated while not increasing the thickness of the light emission device.

Also, since the light emission device according to the foregoing exemplary embodiments does not need a fan for cooling, it is possible that its structure can be compact and life of the electron emission regions can increase according to enhancements of heat dissipation efficiency.

Furthermore, the display device according to the exemplary embodiment can enhance the contrast property of the screen, thereby improving the display quality. In addition, the power consumption of the display device can be reduced, and the device can applied to a large-size display.

## Claims

1. A light emission device comprising:
a first substrate (12);
a second substrate (14) facing the first substrate (12);
a vacuum vessel formed between the first substrate (12) and the second substrate (14);
an electron emission unit (110) arranged on the first substrate (12);
a light emission unit (120) arranged on the second substrate (14); and
a heat transfer medium (32A) located within the vacuum vessel, the heat transfer medium (32A) being adapted to absorb and to dissipate generated heat of the vacuum vessel,
wherein the second substrate (14) comprises an active area (A) and a non-active area (NA) surrounding the active area (A), and
wherein the heat transfer (32A) medium is arranged within the non-active area (NA).

2. The light emission device of claim 1, wherein the heat transfer medium (32A) comprises:
a chamber (34A, 34C) in the non-active area (NA); and
a coolant (38A, 38C) inside the chamber (34A, 34C).

3. The light emission device of claim 2, wherein the chamber (34A) comprises a housing (36A) located on the first substrate (12) for enclosing the chamber (34A) with the first substrate (12).

4. The light emission device of claim 2, wherein the coolant (38C, 38D) contacts the light emission unit (120C, 30C, 120D, 30D).

5. The light emission device according to one of the preceding claims, wherein the light emission unit (120, 120C, 120D) comprises:
a phosphor layer (28, 28D); and
an anode electrode (30, 30C, 30D) located on a surface of the phosphor layer (28, 28D).

6. The light emission device according to one of the claims 4 and 5, wherein the anode electrode (30, 30C, 30D) directly contacts the coolant (38C, 38D).

7. The light emission device according to one of the preceding claims, wherein the light emission unit (120, 120C, 120D) comprises:
phosphor layers (28D) divided into a plurality of sections;
at least one black layer (42) arranged between the plurality of sections of the phosphor layers (28D); and
an anode electrode (30D) located on surfaces of the phosphor layers (28D) and the at least one black layer (42),
wherein at least one of the anode electrode (30D) and the black layer (42) contacts the coolant (38D).

8. The light emission layer according to one of the claims 2-7, wherein the vacuum vessel includes a sealing member (16) disposed along edge portions between the first substrate (12) and the second substrate (14), and the chamber (34C) is defined by the sealing member (16) and by a barrier (36C) disposed in the vacuum vessel.

9. The light emission device of claim 8, wherein the barrier (36C) has a closed curve shape and extends along the sealing member (16).

10. The light emission device according to one of the claims 8 and 9, wherein the barrier (36C) is connected to the first substrate (12) and the second substrate (14).

11. The light emission device of claim 2, wherein the chamber (34A, 34C) has a closed curve shape and extends between the first substrate (12) and the second substrate (14).

12. The light emission device according to one of the claims 2-11, wherein the coolant (38A, 38C) comprises an ethylene-based material.

13. The light emission device according to one of the preceding claims, wherein the electron emission unit (110) comprises:
cathode electrodes (20);
gate electrodes (24) crossing the cathode electrodes (20);
at least one insulating layer (22) between the cathode electrodes (20) and the gate electrodes (24); and
electron emission regions (26) coupled to the respective cathode electrode (20).

14. A display device comprising:
a light emission device (100) according to one of the preceding claims, and
a panel assembly (210) configured with the light emission device (100) to display an image in response to light emitted from the light emission device (100).

15. The display device of claim 14, wherein:
the panel assembly (210) comprises a plurality of first pixels (PX) disposed in a panel assembly matrix having first pixel rows and first pixel columns; and
the light emission device (100) comprises a plurality of second pixels (EPX) disposed in a light emission device matrix having second pixel rows and second pixel columns, the second pixels (EPX) being less in number than the first pixels (PX), and the second pixels (EPX) being adapted to emit different intensities of light.

16. The display device of claim 15, further comprising a scan driver (224) and a column driver (226) connected to the second pixels (EPX) and to a backlight unit controller (220), wherein the scan driver (224) and the column driver (226) are adapted to drive each of the second pixels (EPX) to represent gray levels in a gray scale ranging from 2 to 8 bits.
